# EUROPÄISCHE PATENTSCHRIFT

(11) **EP 1 285 581 B1**
(45) Veröffentlichungstag und Bekanntmachung des Hinweises auf die Patenterteilung: **01.03.2006**
(21) Anmeldenummer: 02017982.6
(22) Anmeldetag: 10.08.2002
(51) Int. Cl.: A21C 3/06

(54) **Verfahren und System zur Bildung gewickelter Teigprodukte, insbesondere Croissant-Wickel, aus einem flachen, zugeschnittenen Teigstück**
Process and system for making rolled dough products, in particular croissant rolls, from a flat pre-cut dough piece
Procédé et système pour former des produits pâteux roulés, notamment des croissants, à partir d'une pièce de pâte plane découpée

(30) Priorität: 20.08.2001 DE 10139885
(43) Veröffentlichungstag der Anmeldung: 26.02.2003
(73) Patentinhaber: Fritsch GmbH, 97348 Markt Einersheim (DE)
(72) Erfinder: Trost, Ernst, 97348 Markt Einersheim (DE); Bernhardt, Udo, 97346 Iphofen (DE)
(74) Vertreter: Götz, Georg Alois

(56) Entgegenhaltungen:
- EP-A- 0 663 150
- EP-A- 0 673 603
- EP-A- 0 882 399
- WO-A-86/02808
- WO-A-99/49736
- BE-A- 857 418
- FR-A- 617 202
- GB-A- 1 466 314
- GB-A- 2 276 845
- US-A- 1 800 315

## Beschreibung

Die Erfindung betrifft ein Teigstück zur Bildung gewickelter Teigprodukte, insbesondere Croissant-Wickel, mit einer flachen, mehreckigen Grundform, welche zwei schräge und zueinander konvergierende Zwischen- oder Schenkelseiten aufweist, die einem Teil einer Trapezform oder Dreieckform entsprechen und an je einem Ende über eine gemeinsame, eingeschnittene oder durchgeschnittene Basisseite verbunden sind. Ferner betrifft die Erfindung ein zur Bildung dieses Teigstücks beispielsweise aus einem Teigband geeignetes Schneidwerkzeug mit einer Mehrzahl von Schneidelementen, die zum Durchschneiden eines Teigbandes ausgebildet sind und entsprechend den Zwischen-oder Schenkelseiten und der gemeinsamen ein- oder durchgeschnittenen Basisseite des Teigstücks verlaufen. Weiter betrifft die Erfindung ein Herstellungsverfahren für die genannten Teigprodukte unter Verwendung des genannten Werkzeugs. Weiter wird eine Langwirkstation zur Verwendung in dem genannten Teigprodukt-Herstellungsverfahren offenbart, bei der ein Förderband die Teigstücke trägt und mit einer darüber angeordneten Teigwalze mit quer zur Förderrichtung verlaufender Drehachse einen Walzspalt bildet. Weiter wird eine Spreizstation für Teigstücke mit eingeschnittenen Rändern zur Verwendung in dem genannten Herstellungsverfahren offenbart, bei dem Positioniermittel den durch das Einschneiden abgegrenzten Abschnitten der Teigstück-Basisseite eigens zugeordnet sind und das Teigstück erfassen. Weiter wird eine Anordnung zum Langstrecken von Teigstücken offenbart, die aus der vorgenannten Langwirkstation und der vorgenannten Spreizstation kombiniert ist Weiter wird eine Wickelstation für Teigstücke offenbart, welche zum Einsatz in dem genannten Herstellungsverfahren geeignet ist und Wickel-Fördermittel aufweist, womit angelieferte, noch flache Teigstücke erfasst werden. Ferner ist die Wickelstation mit einem Wickelwerk zur vollständigen Bildung der in sich um eine Wickel-Achse quer oder schräg zur Förderrichtung eingerollten Teigprodukte versehen.

Aus EP-A-0 360 498 ist ein System zur Produktion eingerollter Teigstücke bekannt Ein dortiger Aufrollmechanismus ist aus übereinander angeordneten Förderbändern gebildet, wobei das untere Förderband den Teig in allgemeiner Teig-Förderrichtung, und das obere Förderband den Teig in dazu entgegengesetzter Richtung bewegt. Ferner ist für den Aufrollmechanismus eine Einstelleinrichtung vorgesehen, um den Abstand zwischen den beiden, gegenüberliegenden Eingangsenden der beiden Förderbänder zu verstellen. Dies erfolgt mittels vertikal verlaufender, motorisierter Vertikalantriebe, die mit einer Steuerungseinrichtung gekoppelt sind. Abhängig von darin gespeicherten Daten lässt sich so die Eingangsbreite des Aufrollmechanismus verstellen.

Aus EP-B-0 551 177 ist eine Vorrichtung zur Herstellung von Hörnchen mit Füllungen bekannt. Darin transportiert ein Förderband Teigstücke zu einer Aufroll-Vorbereitungseinrichtung, welche das ankommende Teigstück an seiner Vorderkante durch Bewegungen von Riemen anhebt Letzere sind an einem Rahmen bewegbar befestigt, der mit einem Schwenkantrieb gekoppelt ist. Nach dem Anheben der Teigstück-Vorderkante wird der Rahmen mit den Anhebe-Riemen unter die Förderfläche des Förderbandes abgesenkt, um den Weitertransport des vorgeformten Teigstücks zu der eigentlichen Aufrolleinrichtung zu ermöglichen. Diese besitzt zum gleichzeitigen Drücken und Aufrollen des Teigstücks ein über das Förderband ausgebreitetes flexibles Netz.

In EP-B-0 663 150, die den nächstkommenden Stand der Technik bildet, ist eine Vorrichtung zur kontinuierlichen Herstellung von sogenannten spanischen Croissants bekannt, bei der in Reihe ein Schneidsystem, eine Bemehlungseinrichtung, eine Teig-Streckeinrichtung, eine Teig-Aufweitvorrichtung, eine Follvorrichtung, eine Einrollvorrichtung und abschließend eine Biegevorrichtung angeordnet sind. Das Schneidsystem bildet aus kontinuierlichen Teigbändem gleichschenklige Dreiecke, deren Basisseite in Förderrichtung die Vorder- bzw. Frontseite bildet Das Schneidsystem ist mit einer Platte realisiert, welche schräg bzw. konvergent angeordnete Messer so wie zusätzlich ein axiales (in Förderrichtung verlaufendes) Messer aufweist Letzteres bringt einen axialen Schnitt an der Grundlinie bzw. Basisseite des Dreiecks im rechten Winkel an. Anhand dessen wird später in der Aufweitungsvorrichtung nach der Streckeinrichtung die Basisseite geöffnet bzw. gespreizt, wobei eine V-förmige Anordnung gebildet wird. Indem aber die Basisseite in ihrer Mitte eingeschnitten wird, ergibt sich bei der später entstehenden Hörnchen- bzw. Croissantform des fertig gewickelten Teigprodukts der verbreitete Umstand, dass der Mittelabschnitt nicht deutlich voluminöser als die Endabschnitte wird und nur eine relativ geringe Anzahl von Umwicklungen besitzt. Andererseits bleiben die Endbereiche noch relativ dick, und die dort beim Wickeln entstehenden, spiralartig oder schraubenlinienartig übereinander umlaufenden Teigränder besitzen wegen der relativ hohen Wicklungsanzahl nur eine geringe Steigung.

Der Erfindung liegt die Aufgabe zu Grunde, zur Produktion in sich gewickelter Teigprodukte, insbesondere Hörnchen oder spanischer Croissants, ein mit dem Schneiden entstehendes Ausgangsteigstück zu bilden, aus welchem sich croissant- oder hömchenartigen Teigprodukte schaffen lassen, welche sich durch dünne, langgestreckte Endbereiche mit hoher schraubenlinienartiger Teigrandsteigung auszeichnen. Daneben soll für den Mittelabschnitt zwischen den Endbereichen im Vergleich zu letzteren ein relativ großer Durchmesser bzw. relativ großes Volumen mit relativ niedriger Schraubenliniensteigung der übereinander gewickelten Teigränder charakteristisch sein. Ferner soll eine zuverlässige Ausweitung bzw. Aufspreizung der Basisseite des Ausgangs-Teigstücks gewährleistet bzw. ein Abreißen der abgespreizten Teigstückbereiche während des Spreizvorgangs vermieden sein.

Zur Lösung wird das im Patentanspruch 1 angegebene Teigstück vorgeschlagen. Vorteilhafte Ausgestaltungen ergeben sich aus den abhängigen Ansprüchen.

Indem erfindungsgemäß die Basisseite mit wenigstens zwei im Abstand voneinander verlaufenden Einschnitten versehen ist, ergeben sich in Förderrichtung stimseitig drei von einander abgegrenzte Zungenabschnitte, von denen der mittlere Zungenabschnitt zu einem großen Volumen mit hoher Umwicklungsanzahl im Mittelbereich des später eingerollten Teigprodukts führt.

Um das spätere, frontseitige Aufweiten bzw. Spreizen zu erleichtern, ist vorgesehen, dass die beiden beabstandeten Einschnitte mit der Basisseite jeweils einen schrägen Winkel einschließen. Konvergieren die beiden Einschnitte dann noch zu einander, das heißt, laufen ausgehend von der Basisseite die Einschnitte auf die die Basisseite senkrecht durchsetzende Teigstück-Mittelachse zu, lassen sich Annäherungen an die schrägen Zwischen- oder Schenkelseiten und damit dünne Engstellen nach dem Durchschneiden der Basisseite vermeiden. Letztere könnten nämlich ungewollte Bruch- und Abreißstellen bilden, mit dem (durch die vorliegende Erfindung vermiedenen) Nachteil, dass vor allem beim Auseinanderspreizen und späteren Einrollen bzw. Wickeln ein äußerer Zungenabschnitt des Teigstücks der Gefahr ausgesetzt ist, sich leicht zu lösen beziehungsweise abzureißen. Mit der Erfindung lässt sich also Teigstück-Ausschuss deutlich vermindern. Das Vermeiden von Reißstellen bzw. die Stabilisierung der geschnittenen und aufgespreizten Teigstück-Form wird in Weiterführung der soeben angesprochenen Erfindungsausbildung noch dadurch gefördert, dass der Einschnitt nicht parallel zur nächstliegenden Zwischen- oder Schenkelseite verläuft, vielmehr eine jeweils gedachte Verlängerung eines oder beider Einschnitte mit einer gedachten Verlängerung der jeweils nächstliegenden (schrägen) Zwischen- oder Schenkelseite einen spitzen Winkel vorzugsweise von 5 - 25 Grad bildet Die dadurch erzielte Wirkung besteht darin, dass sich der Abstand zwischen dem Basisseiten-Einschnitt und der nächstliegenden, schrägen Zwischen- und Schenkelseite mit zunehmender Entfernung von der Basisseite immer mehr vergrößert. Entsprechend wird bei der nachfolgenden Verarbeitung die Stabilität und Zuverlässigkeit beim Aufspreiz- und Wickelvorgang verbessert.

Zur Lösung der oben formulierten Erfindungsaufgabe wird im Rahmen der allgemeinen erfinderischen Idee ferner das im Patentanspruch 5 angegebene Schneidwerkzeug vorgeschlagen. Zweckmäßige, vorteilhafte Ausgestaltungen ergeben sich aus den abhängigen Ansprüchen.

Indem zwei oder mehr Schneidelemente, nebeneinander im Abstand verlaufend, zum gleichzeitigen oder mehrfachen Ein- und Durchschneiden der Basisseite des Teigstücks ausgebildet sind, lassen sich die für das oben erläuterte, erfindungsgemäße Teigstück charakteristischen Kanten oder Konturen erzeugen. Dies kann mit einem manuell betätigbaren Schneidwerkzeug in der Form einer Schablone mit Grundplatte erreicht werden, bei der die den Zwischen-. Schenkelseiten sowie den Basisseiten entsprechenden Schneidelemente als Außenseiten oder -kanten und die den Einschnitten durch die Basisseite zugeordneten Schneidelemente als schmale, längliche Durchbrüche ausgebildet sind, welche die Grundplatte von der Ober- zur Unterseite durchsetzen und in Richtung zum Grundplatten-inneren verlaufen. Alternativ kann das Schneidwerkzeug in eine motorisch und automatisch betriebene Stanzmaschine integriert sein und dabei den Stempel eines Stanzwerkzeugs bilden. Dieser Stempel weist Schneidkanten auf, welche gemäß Erfindung entsprechend den Zwischen- oder Schenkelseiten und der Basisseite sowie den Einschnitten in die Basisseite des Teigstücks verlaufen.

Im Rahmen der allgemeinen erfinderischen Idee liegt auch das im Patentanspruch 8 angegebene Herstellungsverfahren für gewickelte Teigprodukte, das gegenüber dem vorbekannten Stand der Technik vor allem durch die Verwendung des erfindungsgemäßen Schneidwerkzeugs zur Bildung der mehreren Einschnitte an der Basisseite des Teigstücks abgegrenzt ist. Die oben erläuterten vorteilhaften Wirkungen gelten hier entsprechend. Vorteilhafte, zweckmäßige Ausgestaltungen ergeben sich aus den davon abhängigen Ansprüchen.

Nach einer Ausbildung des erfindungsgemäßen Herstellungsverfahrens wird von dem Teigstück nur ein Teil oder Abschnitt in die Länge gewirkt, gewalzt oder gestreckt, der - in Längs- bzw. Förderrichtung gesehen - außerhalb eines an der Basisseite angrenzenden Bereichs liegt Damit wird - im Gegensatz zu der Lehre in der eingangs genannten EP-B-0 663 150 - erreicht, dass die Teigstärke im Bereich der Basisseite des Teigstücks erhöht wird. Es wird gleichzeitig mit dieser Erfindungsausbildung die Gefahr vermindert, dass Im Basisseitenbereich, wo im Zuge des Aufspreizens besonders starke mechanische Ziehkräfte vor allem auch in Förder-Querrichtung auftreten, die durch die Basisseiten-Einschnitte abgegrenzten, beiden äußeren Zungenabschnitte abreißen könnten. Ein weiterer Effekt des gezielten Verlängerns des der Basisseite nachfolgenden Teigstück-Bereichs besteht darin, dass dieser in seiner Stärke bzw. Dicke vermindert wird und beim späteren Wickelvorgang dort eine erhöhte Anzahl an Umwicklungen ergibt, was bei der Herstellung spanischer Croissant erwünscht sein kann. In weiterer Konsequenz ist auch die Steigung des Schraubenliniengangs der aufeinander gewickelten Teigstückränder im Mittelbereich erniedrigt. Mit dem gezielten Langziehen bzw. Langwirken steht, in Verbindung mit der dem Teig innewohnenden Elastizität, noch der weitere Effekt im Zusammenhang: Nach dem Langstrecken oder Langziehen hat der Teig über einen längeren Zeitraum hinweg das Bestreben, sich wieder elastisch zusammen zu ziehen. Dieser Vorgang dauert noch bei der nachfolgenden Wickel-Verfahrensstufe an, wobei es auf Grund der elastischen Teigschrumpfung zu einer Straffung und erhöhten Stabilität der Wicklungsform kommt.

Eine Steigerung der Effektivität der Langstreckung des Teigstücks lässt sich noch nach einer Weiterentwicklung der soeben erörterten Erfindungsausbildung erreichen. Während eines bestimmten Zeitabschnitts des Herstellungsverfahrens wird die in Förderrichtung nach vorne weisend bewegte Teigstück-Basisseite von Fördermitteln für den Spreizvorgang erfasst und vorzugsweise mit höherer Geschwindigkeit in Förderrichtung gezogen; gleichzeitig wird der nicht erfasste, verbleibende Teigstück-Teil noch von den Mitteln des zuvor erörterten Langstreckens-wirkens oder -walzens bspw. durch eine geringere Fördergeschwindigkeit verzögert.

Eine weitere Ausbildung des erfindungsgemäßen Herstellungsverfahrens betrifft den Einroll- und Wickelschritt des Teigstücks. In einer ersten Wickel-Phase werden Einschlagmittel zum vollständigen Erfassen des Teigstücks eingesetzt, und dabei wird nur die in Förderrichtung vorneweg bewegte Basisseite im wesentlichen über ihre ganze Länge (alle ihre von den Einschnitten definierten Zungenabschnitte) eingeschlagen und umgelegt. In einer nachgeordneten Wickelphase wird dann das bisher nur am Anfangsrand beziehungsweise an der Basisseite eingeschlagene Teigstück nun vollständig eingerollt, indem es lediglich anhand seiner abgespreizten Endbereiche bzw. äußeren Zungenabschnitte von von jeweils eigens zugeordneten Wickelmitteln erfasst wird. Diese besorgen dann das vollständige Einrollen bzw. Einwickeln zum fertigen Teigprodukt, indem lediglich die beiden abgespreizten Endbereiche/Zungenabschnitte eingerollt werden; der Mittelbereich dazwischen wird von einer Beaufschlagung durch die Wickelmittel dagegen freigehalten. Der vorteilhafte Effekt besteht darin, dass ein Mittelbereich des Teigprodukts mit besonders großem Durchmesser und Volumen im Vergleich zu den wesentlich dünneren, langgestreckten Endbereichen entsteht.

Nach dem anfangs genannten Stand der Technik gemäß EP-B-0 663 150 ist es bekannt, zur Erreichung einer notwendigen Backreaktion die Teigstücke vor ihrem Aufweiten bzw. Spreizen einer Streckung mittels Endlosbändern zu unterwerfen, die mit höherer Geschwindigkeit als die Teigstücke tragende Transportbänder umlaufen. Es wird dadurch die Oberseite des jeweiligen Teigstücks schneller als die Unterseite des Teigstücks beschleunigt, was allerdings zu einer Beeinträchtigung oder gar Schädigung der Teigstruktur führen kann. Insbesondere kann die durch Einschneiden empfindliche Teigstück-Basisseite dabei leicht aufreißen.

Folglich stellt sich die weitere Teilaufgabe, eine Streckung des Teigstücks in Förder- bzw. Transportrichtung in schonender Weise bei geringem, gerätetechnischen Aufwand erreichen zu können. Insbesondere soll eine Verlängerung des Teigstücks erreichbar sein, ohne dass die eingeschnittene Teigstück-Basisseite beeinträchtigt wird.

Zur Lösung wird im Rahmen der allgemeinen erfinderischen Idee die im abhängigen Anspruch 14 angegebene Langwirkstation mit Förderband und darüber angeordneter Teigwalze zur Bildung eines Walzspalts vorgeschlagen. Vorteilhafte, zweckmäßige Ausgestaltungen ergeben sich aus den davon abhängigen Ansprüchen, indem dabei die Teigwalze in einem Hebechassis drehgelagert ist, welches mittels eines zeitspezifisch ansteuerbaren Chassisantriebs zum Absenken der Teigwalze auf das Teigstück und zu deren Lösen vom Teigstück verstellbar ist, lässt sich die Teigwaize gezielt in solchen Zeitpunkten auf das Teigstück aufsetzen, in welchen die führend beziehungsweise vorneweg beförderte Teigstück-Basisseite den Walzspalt bereits passiert hat und also von der sich absenkenden Teigwalze nicht mehr beaufschlagt wird. Außerdem wird eine Teigstück-Verlängerung in schonender Weise mit einem Minimum an schädigender Veränderung der Teigstruktur erreicht (sogenanntes "Langwalzen" oder "Langrollen"). Zweckmäßig wird das Absenken der Teigwalze Ober die Antriebssteuerung von einer Sensorik, beispielsweise Lichtschranke, angestoßen, wenn diese die Anwesenheit eines angelieferten Teigstücks delektiert. In weiterer Ausbildung ist noch ein Zeitglied integriert, welches für das derart verzögerte Aufsetzen der Teigwalze sorgt, dass diese die vorausbewegte Teigstück-Basisseite nicht mehr berührt.

Gemäß einer besonderen Ausbildung der erfindungsgemäßen Langwirkstation läuft die Langstreckwaize etwa 10 % schneller als das darunter befindliche Langwirk-Förderband. Ein vorteilhafter Effekt besteht u. a. darin, dass sich das Teigstück leichter von der Langwirkwalze wieder löst.

Gemäß dem Stand der Technik EP-B-0 663 150 ist es auch bekannt, nach dem Strecken des Teigstücks deren Basisseite, die mit einem einzigen, vertikalen mittigen Spalt geschnitten ist, anhand dieses Spalts aufzuspreizen und dabei eine V-artige Grundform zu bilden. Dazu werden an Transportriemen aufgehängte Zangen eingesetzt, welche das dreieckförmige Teigstück an den Enden der Basisseite erfassen. Infolgedessen sind für jedes Teigstück zwei Zangen notwendig, mittels welcher dann jede einzelne Spitze bzw. Ecke an der Basisseite ergriffen wird. Es ergeben sich also zwei beidseitige Zangengruppen mit jeweils zugeordnetem Transportband. Um die vollständige Aufweitung zu erreichen, werden die Zangengruppen divergenten Transportbewegungen unterworfen. Allerdings ist es dabei schwierig, das Untergreifen der Teigstück-Ecken an der Basisseite mit hoher Betriebstuverlässigkeit zu bewerkstelligen. Die divergierende und aufeinander synchronisierte Führung der Zangen erfordert ein aufwendiges Transportsystem.

Zur Abhilfe wird die Spreizstation nach dem abhängigen Anspruch 16 mit das Teigstück erfassenden Positioniermitteln vorgeschlagen, welche den durch das Einschneiden abgegrenzten Basisseiten-Absehnitten eigens zugeordnet sind. Vorteilhafte, zweckmäßige Ausgestaltungen ergeben sich aus den davon abhängigen Ansprüchen. Indem erfindungsgemäß die Positioniermittel als endlos umlaufende Förderbänder und/oder -riemen ausgebildet sind, die in Förderrichtung zueinander auseinanderstrebend oder divergierend verlaufen, können diese gleichsam zwei wesentliche Funktionen gleichzeitig erfüllen: einerseits das Erfassen der auseinander zu spreizenden Teigstücke (was relativ schonend erfolgen kann), andererseits das Transportieren der Teigstück-Basisseiten-Endabschnitte entlang von vorzugsweise V-artig divergierenden Transportbahnen. Die Notwendigkeit besonderer Greifmittel ist also erfindungsgemäß beseitigt. Durch die Verwendung von Spreiz-Förderbändern oder - riemen wird die Halterung des Teigstücks und insbesondere der voneinander abgegrenzten Basisseiten-Zungenabschnitte stabilisiert und präziser entlang der gewünschten divergierenden Bewegungsbahnen geführt.

Ein weiterer vorteilhafter Effekt besteht darin, dass mittels der endlos umlaufenden Spreiz-Fördermittel die Teigstücke über ihre ganze (in Förderrichtung gesehene) Länge und nicht nur, wie nach dem Stand der Technik, an den vorne befindlichen Basisseiten, erfasst werden. Dieser Effekt wird noch durch eine weitere Erfindungsausbildung gefördert, nach der zwei oder mehr, zueinander senkrecht und/oder schräg übereinander angeordnete Förderbänder und/oder -riemen angeordnet sind, die gemeinsam beziehungsweise gleichzeitig zur ober- und unterseitigen Halterung und Erfassung des Teigstücks und insbesondere eines jeweiligen Basisabschnitts zusammenwirken.

Um eine noch effektivere Verlängerung des Teigstücks und damit einer Erhöhung der Umwicklungsanzahl beim späteren Wickeln zu erreichen, wird eine Kombination der genannten Langwirkstation mit der genannten Spreizstation entsprechend dem abhängigen Patentanspruch 18 vorgeschlagen. Indem also die Spreizstation der Langwirkstation mit einem Abstand nachgeordnet ist, der kleiner als die in Förderrichtung gemessene, momentane Länge des ungewickelten Teigstücks ist, und zudem die Fördermittel der Spreizstation (Spreiz-Fördermittel) mit höherer Geschwindigkeit als die Fördermittel der Langwirkstation eingestellt sind, lässt sich das Teigstück anhand seiner eingeschnittenen Basisseite von der Spreizstation erfassen, und gleichzeitig wird der (in Förderrichtung) nachfolgende Teigstück-Teil oder zumindest der (in Förderrichtung gesehene) hintere Endbereich noch von der Teigwalze der Langwirkstation (zurück-) gehalten. Erfindungsgemäß findet also zusätzlich zum Abwalzvorgang noch ein Ziehvorgang statt. Dies kann erfolgen, ohne dass dabei jedenfalls im mittleren Bereich des Teigstücks Reibkräfte an der Ober- und Unterseite (wie nach EP-B-0 663 150) in Angriff gebracht werden und die Teigstruktur beeinträchtigen.

Eine Einrollvorrichtung ist in EP-0 B-663 150 zwar schematisch angedeutet, deren Funktionsweise jedoch nicht im Detail beschrieben. Solche ergeben sich beispielsweise aus JP-A-10 295 250, JP-A-07 255 353, GB-A-2 174 036 und EP-B-0 882 399. Eine gattungsbildende Wickelstation zeigt WO 86/02 808, welche über ein unteres Wickel-Förderband verschwenkbar angelenkte, steife Druckleisten zeigt, welche mit einem quer zur Förderrichtung verlaufenden Abstand angeordnet sind, der dem Abstand der Endbereiche oder Enden des zu wickelnden Teigprodukts entspricht. Ferner sind in einem solchen Abstand noch zwei nebeneinander in Förderrichtung drehbare Druckräder angeordnet. Mit dem jeweiligen Abstand lässt sich erreichen, eine vorher auf das Teigstück angebrachte Füllmasse weitgehend in ihrer Form zu erhalten und nicht zu beeinträchtigen bzw. nicht aus dem Teigstück beim Einrollen auszuquetschen. Werden jedoch Teigstücke mit eingeschnittener, vorneweg geführter Basisseite verwendet, können die im genannten Quer-Abstand voneinander angeordneten Druckräder und Druckleisten leicht dazu führen, dass der oder die Einschnitte durch weiteres Einreißen unbeabsichtigt verlängert bzw. vertieft werden, was die Zuverlässigkeit des Wickelvorgangs vermindert und zu Formbeeinträchtigungen oder gar Ausschuss bei den späteren, gewickelten Teigprodukten führen kann.

Zwar ist aus JP-A-10 295 250 eine Wickeleinrichtung bekannt, welche die vorneweg geförderten Basisseiten von dreieckförmigen Teigstücken vollständig erfasst und in einer nachfolgenden Wickelkammer einrollt. Das resultierende, gewickelte Teigprodukt ist jedoch mit relativ flachen Konturen in der Längsansicht gestaltet, dass heißt, der mittlere Bereich unterscheidet sich in seiner Dicke gegenüber den Enden nicht ausreichend.

Es ergibt sich die weitere Erfindungsteilaufgabe, eine vor allem für Teigstücke mit führend beförderter und eingeschnittener Basisseite geeignete Wicketvorrichtung zu schaffen, welche mit hoher Zuverlässigkeit und Präzision die Bildung gewickelter Teigprodukte ermöglicht, die sich durch einen Mittelbereich hohen Durchmessers und relativ dünne Endbereiche auszeichnen.

Zur Lösung wird die im abhängigen Patentanspruch 19 angegebene Wickelstation vorgeschlagen. Vorteilhafte, zweckmäßige Ausgestaltungen ergeben sich aus den davon abhängigen Ansprüchen.

Indem dem Wickelwerk erfindungsgemäß ein die Teigstücke von den Wickel-Fördermitteln verarbeitendes Einschlagwerk vorgeschaltet ist, weiches zum Erfassen und Umschlagen des Teigstücks über dessen gesamte Basisseite ausgebildet ist, werden die notwendigen Anfangsvoraussetzungen für ein späteres, zuverlässiges und entsprechend der gewünschten Form erfolgendes vollständiges Wickeln des Teigproduktes geschaffen. Insbesondere im Fall mit mehrfach eingeschnittener Basisseite sind die entsprechend abgegrenzten Basisseiten-Zungenabschnitte eingerollt, und die nachfolgenden, den äußeren Zungenabschnitten zugeordneten Wickelorgane können den mittleren Zungenabschnitt zum vollständigen Einrollen gleichsam "mitnehmen", ohne dass sie diesen mechanisch erfassen müssen.

Die erfindungsgemäß beabstandeten Wickelorgane, vor allem, wenn sie als Druckleisten ausgebildet sind, können auf Grund ihres Gewichts frei auf die einzurollenden Teigstück-Enden aufliegen und dadurch das Einwickeln straffer gestalten. Durch Aufsetzen unterschiedlicher Gewichte auf die jeweiligen Wicklungsorgane bzw. Druckleisten lassen sich verschiedene Wicklungsintensitäten einstellen.

Vorteilhaft lässt sich die erfindungsgemäße Wickelstation mit einer vertikal aufgehängten Einschlag-Schürze realisieren, die quer zur Förderrichtung angeordnet und nach unten auf die Wickelfördermittel, bspw. Förderband, herabhängt. Zur konkreten Realisierung der Einschlag-Schürze kann eine Drahtschleppe dienen, die mit ihrem unteren Rand auf den Fördermitteln aufliegt und daran schleift. Dadurch wird nur das Einschlagen der Basisseite besorgt. Das eigentliche Wickeln erfolgt durch das nachfolgende Wickelwerk.

Gemäß einer anderen Ausbildung der erfindungsgemäßen Wickelstation ist das Einschlagwerk noch zusätzlich mit einer Druckwalze mit Drehachsen quer zur Förderrichtung und einem Drehsinn entsprechend der Förderrichtung versehen. Dadurch kann die Druckwalze mit den Wickelfördermitteln einen vorwärts treibenden Walzspalt bilden. Der vorteilhafte Effekt besteht u. a. darin, dass das flache Teigstück auf die Wickelfördermittel aufgedrückt wird und damit einen zusätzlichen Halt erfährt. Zweckmäßig läuft die Druckwalze im Vergleich zur Fördergeschwindigkeit etwas schneller.

Weitere Einzelheiten, Merkmale, Vorteile und Wirkungen auf der Basis der Erfindung ergeben sich aus der nachfolgenden Beschreibung bevorzugter Ausführungsformen der Erfindung sowie aus den Zeichnungen. Diese zeigen in jeweils schematischer und/oder perspektivischer Darstellung:
- Figur 1: ein manuell handhabbares Schneidwerkzeug auf einem Teigband,
- Figur 2: ein mit dem Schneidwerkzeug aus dem Teigband geschnittenes Teigstück,
- Figur 3: den Verfahrensablauf mit zugehörigen Gerätekomponenten in der Draufsicht,
- Figur 4: eine Ansicht auf den Ausgang des Stanzwerkzeugs,
- Figur 5: eine rückwärtige Ansicht auf die Langwirkstation sowie auf einen rückwärtigen Teil der nachfolgenden Spreizstation,
- Figur 6: eine Draufsicht auf die Langwirk- und die Spreizstation in Kombination,
- Figur 7: eine Draufsicht auf den einen Teigstück erfassenden Teil der Spreizstation,
- Figur 8: ebenfalls in Draufsicht den Ausgang der Spreizstation mit herausgelangendem, aufgespreiztem Teigstück,
- Figur 9: eine Ansicht der Wickelstation
- Figur 10: eine Draufsicht auf den in Förderrichtung gesehen vordersten Teil der Wickelstation.

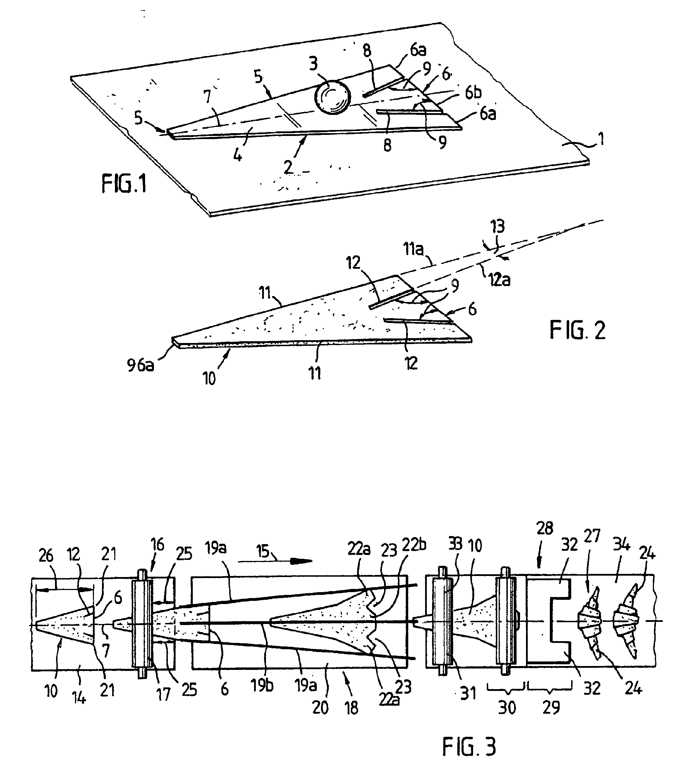

Gemäß Figur 1 wird auf ein flach ausgewalztes Teigband 1 eine manuell handhabbare Schneidschablone 2 mit Knauf beziehungsweise kugeligem Handgriff 3 aufgesetzt. Die Schablonen-Grundplatte 4 bildet an ihren Rändern Schneidkanten 5, welche den Grundriss eines gleichschenkligen Trapezes mit zwei schrägen, zueinander konvergierenden Zwischen- oder Schenkelseiten und einer kürzeren und einer längeren Basisseite 96a beziehungsweise 6 bilden. Von der längeren Basisseite 6 gehen - symmetrisch zur mittleren Trapez-Längsachse 7 - beidseitig je ein länglicher Durchbruch 8 aus. Beide Durchbrüche sind zu einander bzw. in Richtung zur mittleren Längsachse 7 geneigt und bilden dabei mit der längeren Basisseite 6 der Längsachse 7 gegenüberliegend einen spitzen Winkel 9. Um entsprechend den Konturen 5,8 der Schneidschablone 2 ein Teigstück aus dem Teigband 1 zuzuschneiden, wird mit einem (nicht gezeichneten) Messer entlang dieser Konturen gefahren.

Das entsprechende, trapezförmige Teigstück 10 ist in Figur 2 dargestellt. Die zueinander schrägen Zwischen- oder Schenkelseiten 11 sowie die kleinere Basisseite 96a ("abgeschnittene Dreiecksspitze") und die parallel gegenüberliegende, größere Basisseite 6 sind mit den genannten Schneidkanten 5 in Figur 1 kongruent. Das selbe gilt für die Einschnittslinien 12 relativ zu den Durchbrüchen 8 der Schneidschablone 2 gemäß Figur 1. Die Einschnittslinien 12 laufen gemäß gezeichnetem Ausführungsbeispiel nicht exakt parallel zur jeweils nächst liegenden Schenkelseite 11, vielmehr ist es zweckmäßig, dass beide (entsprechend ihrer gedachten Verlängerungslinien 11a, 12a) miteinander einen spitzen Winkel 13 etwa in der Größenordnung von 10 Grad bis 20 Grad einschließen.

In Figur 3 sind das Verfahrensschema sowie schematisch zugehörige Gerätekomponenten grob skizziert. Aus einem (nicht gezeichneten) vorzugsweise maschinellen Schneidwerkzeug, bspw. Stanzmaschine, werden auf einem Förderband 14 mit der Förderrichtung 15 (von links nach rechts auf der Zeichenebene) Teigstücke 10 einer Langwirkstation 16 übergeben. Diese besteht im wesentlichen aus einer Langrollwalze 17, die bezüglich der Ebene der Figur 3 im Uhrzeigersinn entsprechend der Förderrichtung 15 angetrieben wird und mit der Oberseite des Förderbandes 14 einen Walzspalt bildet. Dieser wird von einer (nicht gezeichneten) Lichtschranke, welche ankommende Teigstücke 10 erfasst, verkleinert, so dass es zu einem Langwirken des Teigstücks 10 kommt. Nach einer besonderen Erfindungsoption wird die lichtschrankengesteuerte Absenkung über ein Zeitglied in einer (nicht gezeichneten) Steuerung der Art verzögert, dass die Langrollwalze 17 immer erst dann aufsetzt, nachdem die in Förderrichtung 15 vorneweg beförderte Basisseite 6 den Walzspalt unter der Langrollwalze 17 soeben passiert hat. Es hat sich in der Praxis bewährt, wenn die Langrollwalze 17 etwa 10 % schneller läuft als das darunter laufende Förderband 14, weil sich dann das Teigstück 10 beim Übergang zur nächsten Spreizstation 18 leichter von der Langrollwalze 17 löst.

Gemäß Figur 3 ist die Spreizstation 18 im wesentlichen aus drei, in Förderrichtung 15 divergierenden bzw. auseinander strebenden Fördersträngen, nämlich zwei äußeren Fördersträngen 19a und einem mittleren Förderstrang 19b, sowie einem zugehörigen, darunter laufenden Förderband 20 gebildet. Beide laufen in der gemeinsamen Förderrichtung 15. Der mittlere Förderstrang 19b verläuft etwa deckungsgleich mit der mittleren Längsachse 7 des Teigstücks 10 bzw. der Förderbänder 14, 20. Die beiden äußeren Förderstränge 19a sind gemäß Figur 3 den Stirnecken 21 des Teigstücks zugeordnet. Im Zuge des V-artigen Auseinanderstrebens der beiden äußeren Förderstränge 19a, wobei der mittlere Förderstrang 19b den mittigen Teigstückbereich zwischen seinen beiden Einschnittslinien 12 hält, kommt es zu einem Auseinanderspreizen der längeren Teigstück-Basisseite 6, wobei am rechten Ende des zugehörigen Förderbandes 20 drei voneinander ragende Basisseiten-Zungenabschnitte, nämlich zwei äußere Zungenabschnitte 22a und ein mittlerer Zungenabschnitt 22b, ausgeprägt werden. Gleichzeitig entstehen zwischen den drei Zungenabschnitten 22a, 22b zwei spitze Spreizwinkel 23, wodurch die drei Zungenabschnitte 22a, 22b voneinander abgegrenzt sind. Die Tiefe der Spreizwinkel 23 geht auf die Länge der beiden Einschnittslinien 12 zurück, welche die Basisseiten-Endbereiche 6a und den Basisseiten-Mittelbereich 6b (vgl. Figur 1) von einander unterscheiden. Die dadurch ermöglichte Spreizung oder Streckung in eine Richtung quer zur Förderrichtung 15 erleichtert die Bildung geforderter, dünner, langer Croissant-Enden 24 (vgl. rechtes Ende der Figur 3).

Insbesondere wirken die Langwirkstation 16 bzw. die Langrollwalze 17 und die nachgeschaltete Spreizstation 18 bzw. die drei Förderstränge 19a, 19b zur Streckung und Verlängerung des Teigstücks 10 in Förderrichtung15 zusammen. Dazu ist der Abstand 25 zwischen der Langrollwalze 17 und den in Förderrichtung 15 hinteren Umlaufenden der Förderstränge 19a, 19b kleiner bemessen, als die in Förderrichtung 15 abgenommene Länge 26 des noch nicht langgewirkten und langgestreckten Teigstücks 10 auf dem gemäß Figur 3 ersten Förderband 14 vor der Langrollwalze 17. Infolgedessen befindet sich, wenn die vordere längere Basisseite 6 des Teigstücks 10 bereits von den Fördersträngen 19a, 19b erfasst ist, der in Förderrichtung 15 hintere Endbereich mit der kürzere Basisseite 96a ("abgeschnittene Dreiecksspitze") noch im Walzspalt zwischen der Langrollwalze 17 und dem gegenüberliegenden Förderband 14. Aufgrund einer höheren Umlauf- bzw. Fördergeschwindigkeit der Förderstränge 19a, 19b sowie des ggf. darunter laufenden Förderbands 20 oder weiterer Förderriemen gegenüber dem ersten Förderband 14 und der darüber sich drehenden Langrollwalze 17 erfolgt eine Streckung des Teigstücks 10 in Förderrichtung, wodurch sich eine erhebliche Verlängerung für das Teigstück 10 ergibt, wie ein Vergleich der Teigstück-Gestalten einerseits vor der Langrollwalze 17 und andererseits im Bereich der Förderriemen 19a, 19b zeigt. Dadurch lässt sich aus dem Teigstück 10 für das später fertig gewickelte Teigprodukt 27 eine hohe Wicklungsanzahl, bspw. sechs bis sieben Wicklungen erhalten. Dabei nimmt der Abstand der Wicklungen voneinander von der Mitte des gewickelten Teigprodukts bis zu den Enden kontinuierlich zu.

Gemäß Figur 3 ist der Spreizstation 18 nachgeordnet eine Wickelstation 28. Sie ist im wesentlichem aus einem Wickelwerk 29 und einem diesem vorgeschalteten Einschlagwerk 30 gebildet, dem optional noch eine Stabilisierungsdruckwalze 31 vorgeschaltet sein kann. Sie stabilisiert die flach ausgewalzte Gestalt und sonstige, auseinander gespreizte Form des Teigstücks 10, welches eine Tendenz zu einem expandierenden Volumen aufweist. Das Wickelwerk besitzt zwei Wickelorgane 32, die je dem Einwickeln der Croissant-Enden 24 dienen bzw. den äußeren Zungenabschnitten 22a des (noch nicht gewickelten) Teigstücks 10 zugeordnet sind. Der Abstand der beiden Wickelorgane quer zur Förderrichtung 15 ist entsprechend bemessen. Eine Druckwalze 33 des Einschlagwerks 30 bildet mit einem darunter gegenüberliegenden Wickelförderband 34 einen Teigstück-Förderspalt, um das anfängliche Einschlagen der Teigstück-Basisseite 6 mit den Zungenabschnitten 22a, 22b zu erleichtern (siehe unten). Am Ausgang des U-artigen Wickelwerks 29 werden auf dem Wickelförderband 34 die fertig gewickelten Teigprodukte 27 zu einer (nicht gezeichneten) Biegestation befördert, wo das Umbiegen der Croissant- bzw. Teigprodukt-Enden entweder automatischmaschinell oder manuell erfolgen kann.

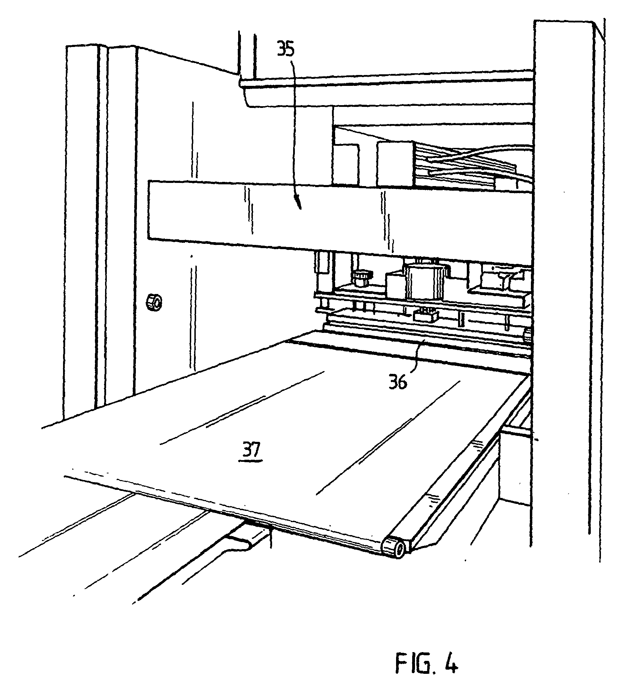

In Figur 4 ist die Ausgangsseite einer Stanzmaschine 35 mit in alternierenden Drehrichtungen bewegtem Stanzwerkzeug 36 dargestellt. Das Stanzwerkzeug wird stempelartig auf ein darunter bewegtes Förderband 37 periodisch abgesenkt. Mittels der Schneidkanten des Stanzwerkzeugs 36, welche entsprechend den Schneidkanten 5 und den Durchbrüchen 8 gemäß Figur 1 verlaufen, wird das in Figur 2 dargestellte Teigstück 10 gebildet, welches dann mit seiner längeren Basisseite 6 vorneweg zur nachfolgenden Langwirkstation 16 befördert wird.

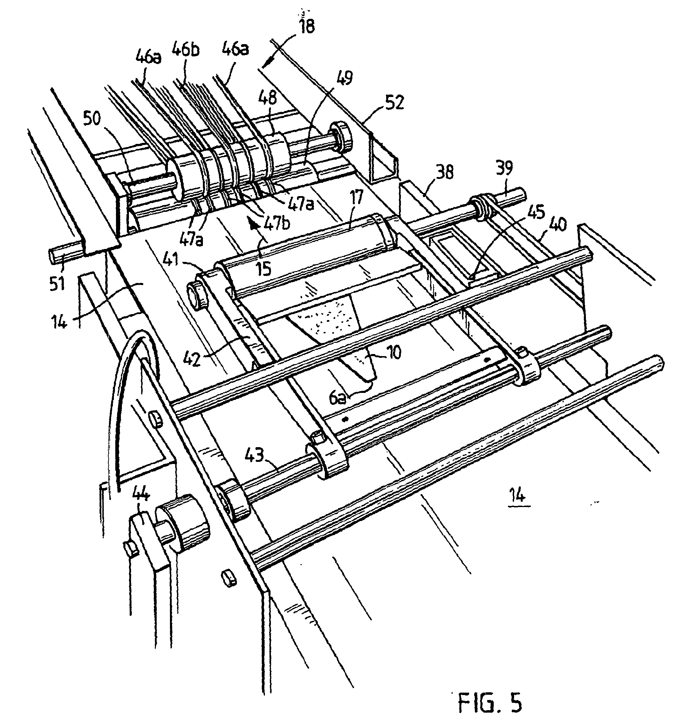

Gemäß Figur 5 besitzt die dem Förderband 14 gegenüberliegende Langrollwalze 17 der Langwirkstation 16 eine seitlich vom Förderbandrahmen 38 vorstehende Antriebswelle 39, die mit einem Riementrieb 40 in Eingriff steht. Die Langrollwalze 17 selbst ist in einem Schwenkchassis 41 drehbar gelagert, welches über zwei parallele Schenkel 42 an einer in Förderrichtung 15 der Langrollwalze 17 vorgelagerten Schwenkwelle 43 hinauf und herunter schwenkbar angelenkt ist.

Die Schwenkwelle 43 wird von einem (schematischisch angedeuteten) Schwenkantrieb 44 abhängig von der Ansteuerung eines Teigstück-Sensors 45 gedreht. Der Sensor 45, bspw. als Lichtschranke realisiert, ist seitlich des Bereichs unmittelbar vor dem Eingang zu dem aus Langrollwalze 17 und Förderband 14 gebildeten Walzspalt angeordnet. Damit die Langrollwalze 17 über das Schenkchassis 42 zeitgerecht auf den Teigstückbereich unmittelbar dessen Basisseite 6 nachfolgend aufgesetzt wird, durchläuft das Ausgangssignal des Sensors 45 ein Verzögerungsglied einer (nicht gezeichneten) Steuerung, so dass der Schwenkantrieb 44 erst über der Teigstück-Basisseite 6 verzögert angesteuert wird.

Gemäß Figur 5 ist die Spreizstation 18 (anders als nach Figur 3) ohne Förderband realisiert. Statt dessen sind zum sandwichartigen Erfassen des Teigstücks 10 an dessen Ober- und Unterseite oberseitige Förderriemen, nämlich zwei außenseitige Förderriemen 46a und ein mittlerer Förderriemen 46b sowie unterseitige Förderriemen, nämlich je zwei außenseitige Förderriemen 47a und zwei mittlere Förderriemen 47b vorgesehen. Die ober- und unterseitigen Förderriemen laufen in zueinander parallelen Ebenen, wobei die außenseitigen Förderriemen 46a oder die beiden außenseitigen Förderriemen-Paare 47a in Förderrichtung 15 divergieren bzw. V-artig auseinander laufen. Der oberseitige mittlere Förderriemen 46b und das unterseitige mittlere Förderriemen-Paar 47b verlaufen zweckmäßig entlang der mittleren Längsachse 7 sowie parallel zur Förderrichtung 15. Zum Antrieb der Förderriemen sind einander gegenüberliegend zwei zylinderförmige Antriebsrollen 48, 49 mit Antriebswellen 50, 51 quer zur Förderrichtung 15 in einem Maschinenrahmen 52 gelagert und angetrieben. Wie bereits oben angedeutet, ist die Umlaufgeschwindigkeit Förderriemen 46, 47 höher als die Fördergeschwindigkeit der vorgelagerten Langwirkstationen 16 mit Langrollwalze 17 und Förderband 14.

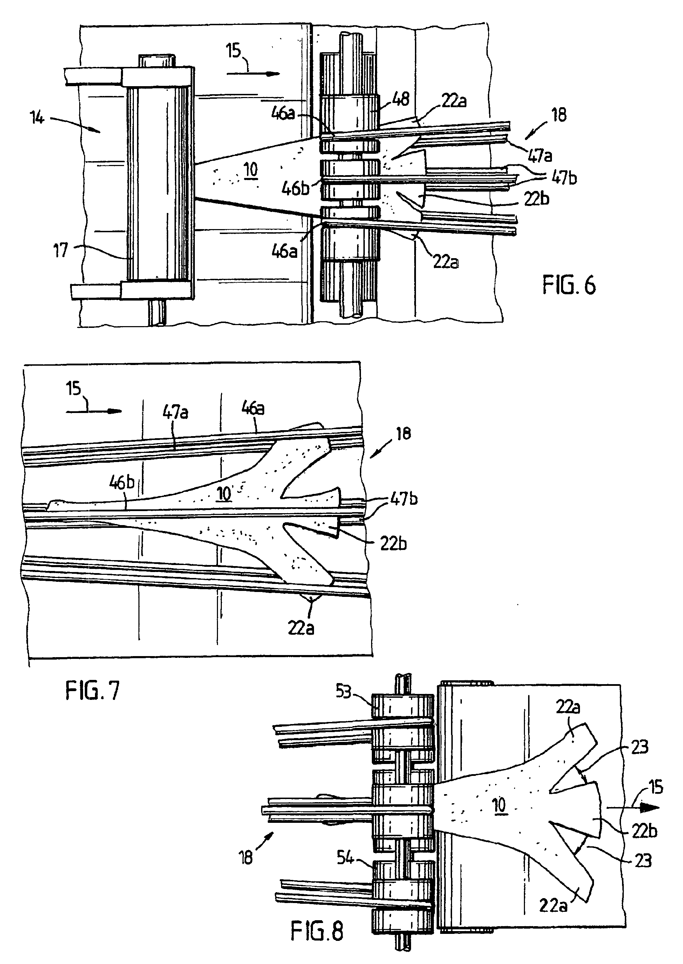

In Figur 6 ist in der Draufsicht dargestellt, wie das Teigstück 10 mit seinem in Förderrichtung 15 vorderen Bereich bereits von der Spreizstation 18 und mit seinem engeren, hinteren Bereich noch von der Langwirkstation 14 erfasst ist. Auf Grund der Differenz in den Fördergeschwindigkeiten der Spreizstation 18 und der Langwirkstation 14 kommt es zu dem bereits beschriebenen Langstrecken des Teigstücks 10. Erkennbar ist ferner, dass die äußeren Förderriemen 46a, 47a die Enden der Basisseite 6 bzw. die äußeren, bereits etwas auseinander gespreizten Zungenabschnitte 22a erfassen, während die mittleren Förderriemen 46b, 47b der Basisseitenmitte 6b bzw. dem mittleren Zungenabschnitt 22b zugeordnet sind.

Im Zuge der weiteren Aufnahme des Teigstücks 10 in die Spreizstation 18 werden durch die divergierenden, äußeren Förderriemen 46a, 47a die äußeren Zungenabschnitte 22a, die zwischen den oberen und unteren Förderriemen stabil und fest gehalten sind; in Richtung quer zur Förderrichtung 15 immer weiter auseinander bewegt - wie in Figur 7 deutlich dargestellt. Die mittleren Förderriemen 46b, 47b halten dabei den Längsmittelbereich des Teigstücks 10 vom vorneweg beförderten, mittleren Zungenabschnitt 22b bis zur am Schluss folgenden Trapezspitze bzw. kürzeren Basisseite 96b stabil in Förderrichtung 15.

Gemäß Figur 8 wird das Teigstück 10 soeben am Ausgang der Spreizstation 18 ausgegeben. Die vorneweg beförderte Basisseite ist nun in voneinander getrennte Zungenabschnitte 22a, 22b mit den Spreizwinkeln 23 dazwischen unterteilt. Die von den Förderriemen 46, 47 umfassten vorderen bzw. ausgangsseitigen, oberen und unteren Antriebsrollen 53, 54 besitzen quer zur Vorderrichtung 15 Abstände voneinander, denen die Spreizwinkel 23 entsprechen. Das Teigstück 10 wird von diesem Ausgang der Spreizstation 18 gerade einem Wickelförderband 55 übergeben.

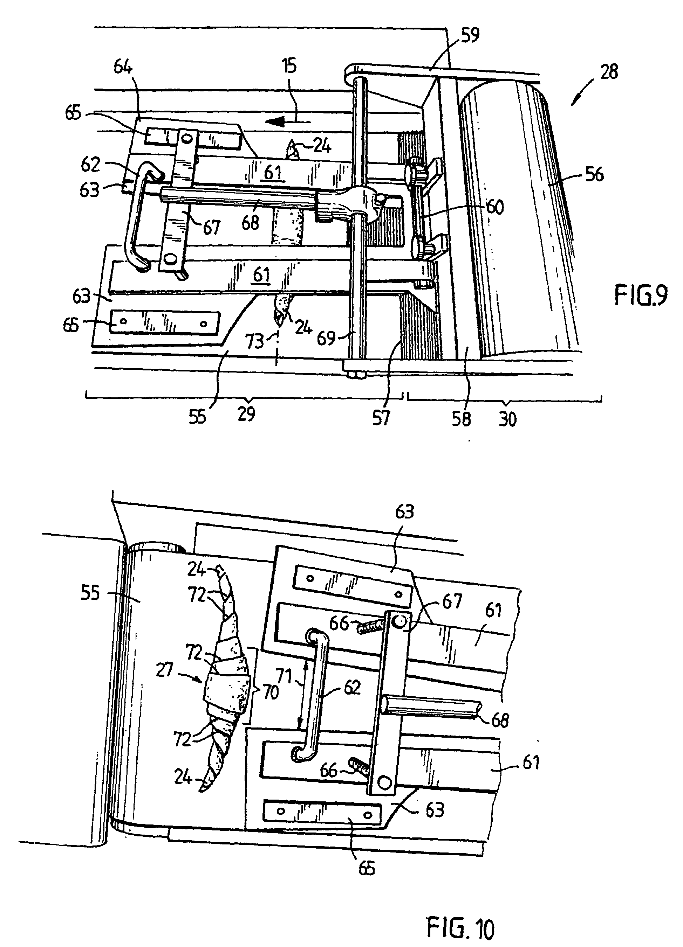

Gemäß Figur 9 führt das Wickelförderband 55 zu einer Druckwalze 56 mit einer Drehachse quer zur Förderrichtung 15 (in Figur 9 von rechts nach links), die mit dem Wickelförderband 55 einen Vortrieb-Walzspalt bildet. Innerhalb dieser Wickelstation 28 ist der Druckwalze 56 eine Einschlag-Schürze 57 unmittelbar nachgeordnet. Diese ist an einem quer zur Förderrichtung 15 bzw. parallel zur Drehachse der Druckwalze 56 verlaufenden Querträger 58 so aufgehangen, dass der untere Rand auf dem Wickelförderband 56 aufliegt und dort in Förderrichtung nach vorne gerichtet schleift. Der Querträger 58 bildet den Bestandteil eines Anlenkgerüsts 59, welches mit einer ortsfest angeordneten Schwenkachse 60, quer zur Förderrichtung 15 verlaufend, versehen ist. An dieser sind zwei Druckleisten 61 angelenkt, welche in Förderrichtung 15 nach vorne vorspringen und voneinander einen Abstand aufweisen, der dem Abstand der Croissant-Enden 24 oder der zugehörigen Endbereiche beim fertig gewickelten Teigprodukt 27 entspricht. Je nach Durchmesser oder Stärke der Croissant-Enden 24 können die Druckleisten 61 um die Schwenkachse 60 nach oben oder unten schwenken. Zweckmäßig sind sie durch einen Querbügel 62 miteinander mechanisch fest gekoppelt, wodurch die beiden Croissant-Enden 24 ein gleichmäßiges Aussehen erhalten. Ferner wird mit dem Querbügel 62 das Auflagegewicht der Druckleisten 61 gegenüber den zu wickelnden Enden 24 erhöht. Gemäß gezeichnetem Beispiel sind die Druckleisten 61 an ihrer Unterseite mit einer flexiblen Auflagematte 63 versehen, welche an der jeweiligen Außenseite zu einer nach außen abstehenden Trägerlasche 64 erweitert ist. Darauf sind - zur Erhöhung des Gewichts - bspw. metallische, längliche Gewichtsleisten 65 oberseitig befestigt. Um eine noch einheitlichere, gleichmäßigere Gestaltung für die Croissant-Enden 24 zu erzielen, kann nach einer optionalen Ausbildung eine Dämpfungseinrichtung auf die Druckleisten-Oberseiten wirken.

Diese Dämpfungseinrichtung weist gemäß Figur 10 zwei Dämpfungsfedem 66 auf, die jeweils auf eine Oberseite einer Druckleiste 61 mit ihrem jeweiligen unteren Stimende befestigt sind und vertikal nach oben ragen. An den oberen Stimenden sind die beiden Dämpfungsfedem 66 durch eine gemeinsame Kopplungs-Querlasche 67 (vorzugsweise metallisch) miteinander gekoppelt. Auf der Oberseite im mittleren Bereich dieser Querlasche 67 erstreckt sich in einem senkrechten Winkel parallel zur Förderrichtung 15 ein Längshebel 68 zu - siehe auch Figur 9 - zu einer quer zur Förderrichtung 15 verlaufenden Anlenkstange 69, welche im Anlenkgerüst 59 befestigt ist. So kann der Längshebel 68 zusammen mit der Kopplungs-Querlasche 67 und den an deren beiden Enden nach unten ragenden Dämpfungsfedern 66 entsprechend den Bewegungen der Druckleisten 61 nach oben oder unten schwenken, wobei die Dämpfungsfedem 66 elastisch komprimieren und expandieren, dabei dämpfen und für die Druckleisten 61 ruhigere Schwenkbewegungen bewirken.

In Figur 10 ist das fertig gewickelte Teigprodukt 27 mit den verhältnismäßig dünnen Croissant-Enden 24 deutlich dargestellt. Die Länge des stark ausgebauchten bzw. voluminösen Mittelbereichs 70 entspricht etwa dem Abstand 71 der beiden mit Druckleisten 61 und Auflagematten 63 realisierten Wickelorgane. Im Mittelbereich 70 ist die Zahl der Umwindungen sowie die Steigung der von den Teigstückrändem herrührenden, schraubenartig verlaufenden Wicklungslinien 72 relativ hoch, im wesentlich dünneren Bereich zu den Croissant-Enden 24 hin dagegen deutlich niedriger. Aufgrund des Abstands 71 zwischen den Wickelorganen 32; 61, 63 kann sich der Mittelbereich 70 des fertiggewickelten Teigprodukts 27 besonders gut entfalten. Durch die effektive Druckausübung mittels der Druckleisten 61 gelingt es, das Teigstück vollständig zu wickeln, obgleich im Bereich des Einschlagwerks 30 zunächst nur die gesamte (in die drei Zungenabschnitte 22a, 22b gespaltene) Basisseite 6 von der Einschlagschürze 57 umgeschlagen wurde.

### Bezugszeichenliste

- 1: Teigband
- 2: Schneidschablone
- 3: Kugel-Handgriff
- 4: Grundplatte
- 5: Schneidkante
- 6: Basisseite
- 6a: Basisseiten-Endbereiche
- 6b: Basisseiten-Mittelbereich
- 7: mittlere Längsachse
- 8: Durchbruch
- 9: spitzer Winkel
- 10: Teigstück
- 11: Schenkelseite
- 12: Einschnittslinie
- 13: spitzer Winkel
- 14: Förderband
- 15: Förderrichtung
- 16: Langwirkstation
- 17: Langrollwalze
- 18: Spreizstation
- 19a, 19b: Förderstrang
- 20: Förderband
- 21: Stimecke
- 22a, 22b: Zungenabschnitt
- 23: spitze Spreizwinkel
- 24: Croissant-Enden
- 25: Abstand
- 26: Länge
- 27: Teigprodukt
- 28: Wickelstation
- 29: Wickelwerk
- 30: Einschlagwerk
- 31: Stabilisierungsdruckwalze
- 32: Wickelorgane
- 33: Druckwalze
- 34: Wickelförderband
- 35: Stanzmaschine
- 36: Stanzwerkzeug
- 37: Förderband
- 38: Förderbandrahmen
- 39: Antriebswelle
- 40: Riementrieb
- 41: Schwenkchassis
- 42: parallele Schenkel
- 43: Schwenkwelle
- 44: Schwenkantrieb
- 45: Teigstücksensor
- 46a, b: Förderriemen
- 47a, b: Förderriemen
- 48, 49: Antriebsrollen
- 50, 51: Antriebswellen
- 52: Maschinenrahmen
- 53, 54: Antriebsrollen
- 55: Wickelförderband
- 56: Druckwalze
- 57: Einschlagschürze
- 58: Querträger
- 59: Anlenkgerüst
- 60: Schwenkachse
- 61: Druckleisten
- 62: Querbügel
- 63: Auflagenmatte
- 64: Trägerlasche
- 65: Gewichtsleiste
- 66: Dämpfungsfedem
- 67: Kopplungs-Querlasche
- 68: Längshebel
- 69: Anlenkstange
- 70: Mittelbereich
- 71: Abstand
- 72: Wicklungslinie
- 73: Wickelachse
- 96a: kürzere Basisseite

## Patentansprüche

1. Teigstück (10) zur Bildung gewickelter Teigprodukte (27), insbesondere Croissant-Wickel, mit einer flachen mehreckigen Grundform, welche zwei schräge und zueinander konvergierende Zwischen- oder Schenkelseiten (11) aufweist, die einem Teil einer Trapezform oder Dreieckform entsprechen und an je einem Ende über eine gemeinsame, ein- oder durchgeschnittenen Basisseite (6) verbunden sind, **dadurch gekennzeichnet, daß** die Basisseite (6) mit wenigstens zwei im Abstand voneinander verlaufenden Einschnitten (12) versehen ist, wobei die beiden Einschnitte (12) mit der Basisseite (6) jeweils einen schrägen und/oder spitzen Winkel (9) einschließen und zueinander konvergieren.

2. Teigstück (10) nach Anspruch 1, **dadurch gekennzeichnet, daß** der Einschnitt (12) nicht parallel zur nächstliegenden Zwischen- oder Schenkelseite (11) verläuft, und/oder eine jeweils gedachte Verlängerung eines oder beider Einschnitte (12) mit einer gedachten Verlängerung der jeweils nächstliegenden Zwischen- oder Schenkelseite (11) einen spitzen Winkel (13) vorzugsweise von 5 bis 25 Grad bildet

3. Teigstück (10) nach Anspruch 1 oder 2, **dadurch gekennzeichnet, dass** die Einschnitte (12) bezüglich einer Teigstück-Mittelachse (7) zueinander symmetrisch verlaufen.

4. Teigstück (10) nach einem der vorangehenden Ansprüche, **dadurch gekennzeichnet, dass** der Abstand der zwei Einschnitte (12) an der Basisseite (6) der Länge des mittleren Abschnitts (70) des gewickelten und/oder gebogenen Teigprodukts (27) zwischen zwei gegebenenfalls abgebogenen Endbereichen (24) entspricht.

5. Schneidwerkzeug (2,36) zur Bildung des Teigstücks (10) nach einem der vorangehenden Ansprüche aus einem Teigband (1), mit einer Mehrzahl von zum Durchschneiden eines Teigbands (1) ausgebildeten Schneidelementen, die entsprechend den Zwischen- oder Schenkelseiten (11) und der gemeinsamen, ein- oder durchgeschnittenen Basisseite (6) des Teigstücks (10) verlaufen, **dadurch gekennzeichnet, dass** zwei oder mehr Schneidelemente nebeneinander im Abstand verlaufend zum mehrfachen und/oder gleichzeitigen Ein- oder Durchschneiden (12) der Basisseite (6) des Teigstücks (10) ausgebildet sind.

6. Schneidwerkzeug (2,36) nach Anspruch 5, **gekennzeichnet durch** eine Ausbildung als Schablone (2) mit Grundplatte (4), bei der die den Zwischen-oder Schenkelseiten (11) sowie der Basisseite (6) entsprechenden Schneidelemente als Außenseiten oder -kanten (5) und die den Einschnitten (12) der Teigstück-Basisseite (6) zugeordneten Scheidelemente als schmale, längliche Durchbrüche (8) ausgebildet sind, welche die Grundplatte (4) durchsetzen und zum Grundplatten-Inneren verlaufen.

7. Schneidwerkzeug (2,36) nach Anspruch 6, **gekennzeichnet durch** eine Ausbildung als Stempel eines Stanzwerkzeugs (36) mit Scheidkanten, die entsprechend den Zwischen- oder Schenkelseiten (11) und der Basisseite (6) des Teigstücks (10) sowie den Einschnitten (12) in die Basisseite (6) des Teigstücks (10) verlaufen.

8. Verfahren zur Herstellung gewickelter Teigprodukte, insbesondere Croissant-Wickel, unter Verwendung eines Werkzeugs nach einem der vorangehenden Ansprüche, mit folgenden Schritten:
a) Ausschneiden des Teigstücks (10) aus einem Teigband mittels des Schneidwerkzeugs mit den mehreren Einschnitten (12) an der Basisseite (6),
b) Langwirken, Langwalzen und/oder Langstrecken des Teigstücks (10).
c) Spreizen beziehungsweise Auseinanderbewegen von drei oder mehr Basisseiten-Abschnitten (22a,22b), die durch die gemäß Schritt a) erzeugten Einschnitte (12) voneinander abgegrenzt sind,
d) Einrollen des noch flachen Teigstücks (10) in sich um eine Wickel-Achse kongruent zu oder entsprechend seiner Basisseite (6) zum gewickelten Teigprodukt (27).

9. Verfahren nach Anspruch 8, **dadurch gekennzeichnet, dass** von dem Teigstück (10) nur ein Teil oder Abschnitt in einer Längs- beziehungsweise Förderrichtung (15) gewirkt, gewalzt oder gestreckt wird, der außerhalb eines an der Basisseite (6) angrenzenden Bereichs liegt.

10. Verfahren nach Anspruch 8 oder 9, **dadurch gekennzeichnet, dass** zum Spreizen jeder Basisseiten-Abschnitt (22a,22b) von eigens zugeordneten Spreit-Fördermitteln (19a,b;46a,b;47a,b) erfaßt wird, und diese zueinander divergierend bewegt werden.

11. Verfahren nach Anspruch 10, **dadurch gekennzeichnet, dass** während eines Verfahrens-Zeitabschnitts die in Förderrichtung (15) vorneweg bewegte Teigstück-Basisseite (6) von den Spreiz-Fördermitteln (19a,b;46a,b;47a,b) erfaßt und in Förderrichtung (15) gezogen wird, während der verbleibende Teigstück-Teil (6a) noch von den Mitteln (17) zum Langstrecken, -wirken oder -walzen gegengehalten wird.

12. Verfahren nach Anspruch 11, **dadurch gekennzeichnet, dass** im Rahmen des Langstreckens, -walzens oder -wirkens das Teigstück (10) mit einer Geschwindigkeit befördert wird, die niedriger ist als die der zum Spreizen eingesetzten Fördermittel (19a,b;46a,b;47a,b).

13. Verfahren nach einem der vorangehenden Ansprüche, **dadurch gekennzeichnet, dass** zum Wickeln in einer ersten Phase das Teigstück (10) von Einschlagmitteln (30;56,57) vollständig erfaßt und nur mit seiner vorneweg beförderten Basisseite (6) eingeschlagen und umgelegt wird, und dann in einer nachgeordneten Wickelphase das bisher nur an der Basisseite (6) eingeschlagene Teigstück (10) nur anhand seiner abgespreizten Endbereiche (22a) von jeweils eigens zugeordneten Wickelmitteln (32;61,63) erfaßt und zum vollständig gewickelten Teigprodukt (27) verarbeitet werden, wobei der Mittelbereich (70) zwischen den Endbereichen von einer Beaufschlagung durch Wickelmittel (32;61,63) freigehalten wird.

14. Vorrichtung mit Gerätekomponenten umfassend ein Schneidwerkzeug nach einem der Ansprüche 5 bis 7 und eine Langwirkstation (16) für Teigstücke (10) zur Verwendung in dem Verfahren nach einem der vorangehenden Ansprüche, mit einem Förderband (14) zum Tragen der Teigstücke (10) und einer darüber angeordneten Teigwalze (17) mit quer zur Förderrichtung (15) verlaufender Drehachse (39) zur Bildung eines Walzspalts mit dem Förderband (14), wobei die Teigwalze (17) in einem Hebechassis (41) drehgelagert ist, welches mittels eines zeitselektiv ansteuerbaren Chassisantriebs (44) zum Absenken der Teigwalze (17) auf das Teigstück (10) und zu deren Lösen vom Teigstück (10) verstellbar ist.

15. Vorrichtung nach nach Anspruch 14, wobei die Langwirkstation (16) eine angelieferte Teigstücke (10) erfassende Sensorik (45) aufweist, mit welcher eine derart ausgebildete und/oder eingestellte Antriebssteuerung für den Chassisantrieb gekoppelt ist, dass die Teigwalze (17) zeitlich verzögert bezüglich eines Anfangsrands, insbesondere einer Dreieck-Basisseite (6), des Teigstücks (10) erst auf einen nachfolgenden Teigstück-Teil aufgesetzt wird.

16. Vorrichtung nach Anspruch 14 oder 15 ferner umfassend eine Spreizstation (18) für Teigstücke (10) mit jeweils eingeschnittener Basisseite (6) zur Verwendung in dem Verfahren nach einem der vorangehenden Ansprüche, mit das Teigstück (10) erfassenden Positioniermitteln, welche den durch das Einschneiden (12) abgegrenzten Basisseiten-Abschnitten (22a,22b) eigens zugeordnet sind, wobei die Positioniermittel als endlos umlaufende Förderbänder und/oder -riemen (46a,b;47a,b) ausgebildet sind, die in Förderrichtung (15) zueinander auseinanderstrebend oder divergierend verlaufen.

17. Vorrichtung nach Anspruch 16, wobei die Spreizstation (18) mindestens zwei zueinander senkrecht und/oder schräg übereinander angeordnete Förderbänder und/oder -riemen (46a,b;47a,b) aufweist, die gemeinsam zur ober- und unterseitigen Halterung und Erfassung eines jeweiligen Basisseitenabschnitts (22a,22b) ausgebildet sind und zusammenwirken.

18. Vorrichtung nach Anspruch 17 umfassend eine Anordnung zum Langstrecken, mit der Langwirkstation (16) und mit der Spreizstation (18), wobei die Spreizstation (18) der Langwirkstation (16) mit einem Abstand (25) kleiner als die in Förderrichtung (15) gemessene momentane Länge des ungewickelten Teigstücks (10) nachgeordnet ist, und die Fördermittel (46a,b;47a,b) der Spreizstation (18) mit höherer Fördergeschwindigkeit als die der Langwirkstation (16) eingestellt sind.

19. Vorrichtung nach einer der Ansprüche 14 bis 18 ferner umfassend eine Wickelstation (28) für Teigstücke (10), zur Verwendung in dem Verfahren nach einem der vorangehenden Ansprüche, mit angelieferte, noch flache Teigstücke (10) erfassenden Wickel-Fördermitteln (55), und mit einem Wickelwerk (29) zur vollständigen Bildung von in sich um eine Wickel-Achse (73) quer oder schräg zur Förderrichtung (15) eingerollten Teigprodukten (27), wobei das Wickelwerk (29) je einem der Endbereiche (24) des gewickelten Teigprodukts (27) zugeordnete Wickelorgane (32) aufweist, welche mit einem quer zur Förderrichtung (15) verlaufenden Abstand (71) angeordnet sind, der dem Abstand der Endbereiche oder Enden (24) und/oder der Länge des Mittelbereichs (70) des gewickelten Teigprodukts (27) entspricht, wobei dem Wickelwerk (29) ein die Teigstücke (10) von den Fördermitteln (55) verarbeitendes Einschlagwerk (30) vorgeordnet ist, welches zum Erfassen und Umschlagen der gesamten Basisseite (6) ausgebildet ist.

20. Vorrichtung nach Anspruch 19 , wobei die im genannten Abstand (71) angeordneten Wickelorgane (32) miteinander starr durch wenigstens einen Querbügel (62) gekoppelt sind, der sich über die Fördermittel (55) quer zu deren Förderrichtung (15) erstreckt.

21. Vorrichtung mit Wickelstation (28) nach Anspruch 19 oder 20, wobei das Einschlagwerk (30) mit einer vertikal aufgehängten Einschlag-Schürze (57) realisiert ist, die quer zur Förderrichtung (15) angeordnet ist und nach unten auf die Wickelfördermittel (55) herabhängt und/oder darauf schleift.

22. Vorrichtung mit Wickelstation (28) nach Anspruch 21, wobei beim Einschlagwerk (30) der Einschlag-Schürze (57) eine Druckwalze (56) mit einer Drehachse quer zur Förderrichtung (15) und einem Drehsinn entsprechend der Förderrichtung (15) derart vorgeordnet ist, dass die Druckwalze (56) mit den Fördermitteln (55) einen in Förderichtung (15) treibenden Walzspalt bildet.

## Claims

1. Dough piece (10) for forming rolled dough products (27), in particular croissant rolls, with a flat polygonal base shape, which has two oblique and converging intermediate or lateral sides (11), which correspond to part of a trapezium or triangle shape and are joined at one end each via a common notched or perforated base side (6), **characterised in that** the base side (6) is provided with at least two notches (12) spaced apart, the two notches (12) including an oblique and/or acute angle (9) with the base side (6) and converging with one another.

2. Dough piece (10) according to claim 1, **characterised in that** the notch (12) does not run parallel to the adjacent intermediate side (11) and/or a respective hypothetical extension of one or both notches (12) forms an acute angle (13) of preferably 5 to 25 degrees with a hypothetical extension of the respectively adjacent intermediate or lateral side (11).

3. Dough piece (10) according to claim 1 or 2, **characterised in that** the notches (12) extend symmetrically to one another with respect to a dough-piece central axis (7).

4. Dough piece (10) according to one of the preceding claims, **characterised in that** the distance between the two notches (12) at the base side (6) corresponds to the length of the central section (70) of the rolled and/or curved dough product (27) between two optionally curved end regions (24).

5. Cutting tool (2, 36) for forming the dough piece (10) according to one of the preceding claims from a dough strip (1), with a plurality of cutting elements formed for cutting through a dough strip (1) and extending along the intermediate or lateral sides (11) and the common notched or perforated base side (6) of the dough piece (10), **characterised in that** two or more cutting elements are formed adjacent to one another but spaced apart for the multiple and/or simultaneous notching or perforation (12) of the base side (6) of the dough piece (10).

6. Cutting tool (2, 36) according to claim 5, **characterised by** a formation as a template (2) with a base plate (4), in which the cutting elements corresponding to the intermediate or lateral sides (11) and the base side (5) are formed as outer sides or edges (5) and the cutting elements allocated to the notches (12) of the dough piece base side (6) are formed as narrow, elongate piercings (8) which penetrate the base plate (4) and extend to the base plate interior.

7. Cutting tool (2, 36) according to claim 6, **characterised by** a formation as a punch of a punching tool (35) with cutting edges, which extend along the intermediate or lateral sides (11) and the base side (6) of the dough piece (10) and along the notches (12) in the base side (6) of the dough piece (10).

8. Method of manufacturing rolled dough products, in particular croissant rolls, using a tool according to one of the preceding claims, in the following stages:
a) cutting out of the dough piece (10) from a dough strip by means of the cutting tool having the plural notches (12) on the base side (6),
b) longitudinal working, longitudinal rolling and/or longitudinal stretching of the dough piece (10),
c) spreading or separation of three or more base part sections (22a, 22b), which are defined from one another by the notches (12) produced according to step a),
d) rolling up of the still flat dough piece (10) about a rolling axis congruent with or corresponding to its base side (6) to form the rolled dough product (27).

9. Method according to claim 8, **characterised in that** only a part or section of the dough piece (10) which lies outside a region abutting the base side (6) is worked, rolled or stretched in a longitudinal or conveying direction (15).

10. Method according to claim 8 or 9, **characterised in that** in order to spread the piece out, each base side section (22a, 22b) is grasped by individually allocated spreading-conveying means (19a, b; 46a, b; 47a, b), and these are moved so as to diverge from one another.

11. Method according to claim 10, **characterised in that** during a processing time section the dough-piece base side (6) being moved on ahead in the conveying direction (15) is grasped by the spreading-conveying means (19a, b; 46a, b; 47a, b) and is pulled in the conveying direction (15), whilst the remaining part of the dough piece (6a) is held back by the means (17) for longitudinal stretching, working or rolling.

12. Method according to claim 11, **characterised in that** within the scope of longitudinal stretching, rolling or working, the dough piece (10) is conveyed at a speed which is slower than that of the conveying means (19a, b; 46a, b; 47a, b) used for spreading.

13. Method according to one of the preceding claims, **characterised in that** in order to roll, in a first phase the dough piece (10) is fully grasped by folding means (30; 56, 57) and is only folded and moved by its base side (6) being conveyed ahead, and then in a subsequent rolling phase, the dough piece (10) hitherto only folded at the base side (6) is grasped only by means of its spread-out end regions (22a) by individually allocated rolling means (32; 61, 53) and is processed into the fully-rolled dough product (27), the central region (70) between the end regions being kept free of action by rolling means (32; 61, 63).

14. Apparatus with appliance components comprising a cutting tool according to one of claims 5 to 7 and a longitudinal working bay (16) for dough pieces (10) for use in the method according to one of the preceding claims, comprising a conveyor belt (14) for carrying the dough pieces (10) and a dough roller (17) which is disposed thereabove and which has an axis of rotation (39) extending transverse to the conveying direction (15) in order to form a roller gap with the conveyor belt (14), wherein the dough roller (17) is mounted rotatably in a lifting chassis (41), which is adjustable by means of a chassis drive (44) operating on a time-selection basis for lowering the dough roller (17) on to the dough piece (10) and for detaching the same from the dough piece (10).

15. Apparatus according to claim 14, wherein the longitudinal working bay (16) has a sensor device (45) detecting the dough pieces (10) supplied, a drive control for the chassis drive being coupled to the sensor device (45) and having such a configuration and/or setting that the dough roller (17) is only applied to a subsequent dough piece part subject to a time-lag in respect of a leading edge, in particular a base side (6) of a triangle, of the dough piece (10).

16. Apparatus according to claim 14 or 15, further comprising a spreading bay (18) for dough pieces (10) with a respectively notched base side (6) for use in the method according to one of the preceding claims, having positioning means for detecting the dough piece (10) and which are allocated individually to the base side sections (22a, 22b) defined by the notches (12), wherein the positioning means are formed as endlessly revolving conveyor belts (46a, b; 47a, b), which extend so as to spread out or diverge from one another in the conveying direction (15).

17. Apparatus according to claim 16, wherein the spreading bay (18) has at least two conveyor belts (46a, b; 47a, b) which are disposed perpendicular to one another and/or obliquely one over another and which are formed together to cooperate in the upper-face and lower-face mounting and grasping of a respective base side section (22a, 22b).

18. Apparatus according to claim 17 comprising an arrangement for longitudinal stretching having the longitudinal working bay (16) and the spreading bay (18), the spreading bay (18) being connected in series to the longitudinal working bay (16) at a distance (25) which is smaller than the momentary length of the unrolled dough piece (10) measured in the conveying direction (15), and the conveying means (46a, b; 47a, b) of the spreading bay (18) being set at a higher conveying speed than those of the longitudinal working bay (16).

19. Apparatus according to one of claims 14 to 18, further comprising a rolling bay (28) for dough pieces (10), for use in the method according to one of the preceding claims, comprising rolling-conveying means (55) which grasp the still flat dough pieces (10) supplied, and having a rolling device (29) for complete formation of dough products rolled up about a rolling axis (73) transverse or oblique to the conveying direction (15), wherein the rolling device (29) has winding elements (32) which are allocated to each of the end regions (24) of the rolled dough product (27) and which are disposed with a distance (71) extending transverse to the conveying direction (15) corresponding to the distance of the end regions or ends (24) and/or to the length of the central region (70) of the rolled dough product (27), wherein a folding device (30) processing the dough pieces (10) from the conveyor means (55) is connected upstream of the rolling device (29) and is formed for grasping and folding over the entire base side (6).

20. Apparatus according to claim 19, wherein the rolling elements (32) disposed at the distance (71) indicated are coupled together rigidly by at least one transverse shackle (62), which extends over the conveying means (55) transverse to its conveying direction (15).

21. Apparatus comprising a rolling bay (28) according to claim 19 or 20, wherein the folding device (30) is realised with a vertically suspended folding apron (57), which is disposed transverse to the conveying direction (15) and hangs down on to the rolling-conveying means (55) and/or trails thereon.

22. Apparatus comprising a rolling bay (28) according to claim 21, wherein in the folding device (30) a pressure roller (56) with an axis of rotation transverse to the conveying direction and a direction of rotation corresponding to the conveying direction (15) is allocated to the folding apron (57) in such a manner that the pressure roller (56) forms with the conveying means (55) a roller gap that drives in the conveying direction (15).

## Revendications

1. Pièce de pâte (10) pour former des produits pâteux roulés (27), en particulier des rouleaux de croissants, comportant une forme de base plane, polygonale, qui présente deux côtés intermédiaires ou formant branches (11) obliques et convergeant l'un vers l'autre qui correspondent à une partie d'une forme trapézoïdale ou forme triangulaire et sont reliés chacun à une extrémité par un côté de base (6) commun entaillé ou découpé, **caractérisée en ce que** le côté de base (6) est pourvu d'au moins deux entailles (12) s'écartant l'une de l'autre, les deux entailles (12) avec le côté de base (6) enfermant chaque fois un angle (9) oblique et/ou aigu et convergeant l'une vers l'autre.

2. Pièce de pâte (10) selon la revendication 1, **caractérisée en ce que** l'entaille (12) ne s'étend pas parallèlement au côté intermédiaire ou formant branche (11) le plus proche, et/ou un prolongement chaque fois imaginaire d'une ou des deux entailles (12) forme, avec un prolongement imaginaire du côté intermédiaire ou formant branche (11) chaque fois le plus proche, un angle aigu (13) de préférence de 5 à 25 degrés.

3. Pièce de pâte (10) selon la revendication 1 ou 2, **caractérisée en ce que** les entailles (12) s'étendent symétriquement l'une par rapport l'autre en référence à un axe médian de pièce de pâte (7).

4. Pièce de pâte (10) selon l'une des revendications précédentes, **caractérisée en ce que** la distance des deux entailles (12) sur le côté de base (6) correspond à la longueur de la section centrale (70) du produit pâteux (27) roulé et/ou cintré entre deux zones d'extrémité (24) le cas échéant cintrées.

5. Outil de coupe (2, 36) pour former la pièce de pâte (10) selon l'une revendications précédentes à partir d'une bande de pâte (1), comportant une pluralité d'éléments de coupe réalisés pour découper une bande de pâte (1) qui s'étendent de manière correspondante aux côtés intermédiaires ou formant branches (11) et au côté de base (6) commun entaillé ou découpé de la pièce de pâte (10), **caractérisé en ce que** deux éléments de coupe ou plus sont réalisés s'étendant à distance les uns à côté des autres pour entailler ou découper (12) de manière multiple et/ou simultanée le côté de base (6) de la pièce de pâte (10).

6. Outil de coupe (2, 36) selon la revendication 5, **caractérisé par** une configuration en gabarit (2) avec plaque de base (4) dans lequel les éléments de coupe correspondant aux côtés intermédiaires ou formant branches (11) ainsi qu'au côté de base (6) sont réalisés en côtés ou arêtes extérieures (5) et les éléments de coupe associés aux entailles (12) du côté de base de pièce de pâte (6) sont réalisés en découpes (8) étroites, oblongues qui traversent la plaque de base (4) et s'étendent vers l'intérieur de la plaque de base.

7. Outil de coupe (2, 36) selon la revendication 6, **caractérisé par** une configuration en poinçon d'un outil d'estampage (36) comportant des arêtes de coupe qui s'étendent de manière correspondante aux côtés intermédiaires ou formant branches (11) et au côté de base (6) de la pièce de pâte (10) ainsi qu'aux entailles (12) dans le côté de base (6) de la pièce de pâte (10).

8. Procédé de fabrication de produits pâteux roulés, en particulier des rouleaux de croissants, en utilisant un outil selon l'une des revendications précédentes, comportant les étapes qui consistent à :
a) découper la pièce de pâte (10) à partir d'une bande de pâte au moyen de l'outil de coupe avec les plusieurs entailles (12) sur le côté de base (6),
b) travailler en longueur, cylindrer en longueur et/ou étirer en longueur la pièce de pâte (10),
c) écarter ou éloigner les unes des autres trois ou plusieurs sections de côté de base (22a, 22b) qui sont délimitées les unes des autres par les entailles (12) créées selon l'étape a),
d) enrouler la pièce de pâte (10) encore plane sur elle-même autour d'un axe d'enroulement de manière adaptée ou correspondante à son côté de base (6) pour former le produit pâteux roulé (27).

9. Procédé selon la revendication 8, **caractérisé en ce que** seule une partie ou section de la pièce de pâte (10) qui se situe à l'extérieur d'une zone adjacente au côté de base (6) est travaillée, cylindrée ou étirée dans une direction longitudinale ou de convoyage (15).

10. Procédé selon la revendication 8 ou 9, **caractérisé en ce que** pour l'écartement, chaque section de côté de base (22a, 22b) est saisie par des moyens de convoyage écarteurs (19a, b ; 46a, b ; 47a, b) spécialement associés, et ceux-ci sont déplacés de manière divergente les uns par rapport aux autres.

11. Procédé selon la revendication 10, **caractérisé en ce que** pendant une fraction chronologique du procédé, le côté de base de pièce de pâte (6) déplacé vers l'avant est saisi par les moyens de convoyage écarteurs (19a, b ; 46a, b ; 47a, b) et étiré dans la direction de convoyage (15), tandis que la partie de pièce de pâte (6a) restante est encore retenue par les moyens (17) d'étirage, de travail ou de cylindrage en longueur.

12. Procédé selon la revendication 11, **caractérisé en ce que** dans le cadre de l'étirage, du cylindrage ou du travail en longueur, la pièce de pâte (10) est convoyée à une vitesse qui est inférieure à celle des moyens de convoyage (19a, b ; 46a, b ; 47a, b) employés pour l'écartement.

13. Procédé selon l'une des revendications précédentes, **caractérisé en ce que** pour l'enroulement, la pièce de pâte (10), dans une première phase, est entièrement saisie par des moyens de préfaçonnage (30 ; 56 ; 57) et n'est préfaçonnée et retournée que par son côté de base (6) convoyé vers l'avant, et ensuite dans une phase d'enroulement ultérieure, la pièce de pâte (10) jusque là uniquement préfaçonnée sur son côté de base (6) n'est saisie qu'à l'aide de ses zones d'extrémité (22a) écartées par des moyens d'enroulement (32 ; 61, 63) chacun spécialement associés et est transformée en le produit pâteux (27) complètement roulé, la zone centrale (70) entre les zones d'extrémité étant maintenue libre de toute alimentation par des moyens d'enroulement (32 ; 61 ; 63).

14. Dispositif comportant des composants d'appareils comprenant un outil de coupe selon l'une des revendications 5 à 7 et une station de travail en longueur (16) pour des pièces de pâte (10) aux fins d'utilisation dans le procédé selon l'une des revendications précédentes, comportant une bande transporteuse (14) pour porter les pièces de pâte (10) et un cylindre pour pâte (17) disposé au-dessus à axe de rotation (39) s'étendant transversalement par rapport à la direction de convoyage (15) pour former un interstice de cylindrage avec la bande transporteuse (14), le cylindre pour pâte (17) étant supporté en rotation dans un châssis de levage (41) lequel peut être déplacé au moyen d'un entraînement de châssis (44) pouvant être programmé chronologiquement, pour abaisser le cylindre pour pâte (17) sur la pièce de pâte (10) et pour son détachement de la pièce de pâte (10).

15. Dispositif selon la revendication 14, dans lequel la station de travail en longueur (16) présente un système détecteur (45) captant des pièces de pâtes (10) amenées, auquel est couplée une commande d'entraînement pour l'entraînement de châssis réalisée et/ou réglée de telle façon que le cylindre pour pâte (17) n'est placé sur une partie suivante de la pièce de pâte qu'avec un retard chronologique par rapport à un bord initial, en particulier un coté de base triangulaire (6), de la pièce de pâte (10).

16. Dispositif selon la revendication 14 ou 15 comprenant par ailleurs une station d'écartement (18) pour des pièces de pâte (10) comportant chacune un côté de base (6) entaillé, aux fins d'utilisation dans le procédé selon l'une des revendications précédentes, comportant des moyens de positionnement saisissant la pièce de pâte (10) qui sont associés spécialement aux sections de côtés de base (22a, 22b) délimitées par l'entaillage (12), les moyens de positionnement étant réalisés en bandes et/ou courroies transporteuses (46a, b ; 47a, b) circulant sans fin qui s'étendent de manière s'écartant ou divergeant les unes des autres dans la direction de convoyage (15).

17. Dispositif selon la revendication 16, dans lequel la station d'écartement (18) présente au moins deux bandes et/ou courroies transporteuses (46a, b ; 47a, b) superposées l'une à l'autre verticalement et/ou obliquement, qui sont réalisées et coopèrent ensemble pour retenir et saisir par dessus et par dessous chaque fois une section de côté de base (22a, 22b).

18. Dispositif selon la revendication 17, comprenant un dispositif d'étirage en longueur, comportant la station de travail en longueur (16) et la station d'écartement (18), la station d'écartement (18) étant disposée en aval de la station de travail en longueur (16) à une distance (25) inférieure à la longueur instantanée de la pièce de pâte (10) non roulée mesurée dans la direction de convoyage (15), et les moyens de convoyage (46a, b ; 47a, b) de la station d'écartement (18) étant réglés à une vitesse de convoyage plus élevée que celle de la station de travail en longueur (16).

19. Dispositif selon l'une des revendications 14 à 18, comprenant en outre une station d'enroulement (28) pour pièces de pâte (10), aux fins d'utilisation dans le procédé selon l'une des revendications précédentes, comportant des moyens de convoyage enrouleurs (55) saisissant des pièces de pâte (10) amenées, encore plates, et comprenant un mécanisme d'enroulement (29) pour former complètement des produits pâteux (27) roulés sur eux-mêmes autour d'un axe d'enroulement (73) transversalement ou obliquement par rapport à la direction de convoyage (15), le mécanisme d'enroulement (29) présentant des organes d'enroulement (32) associés à chacune des zones d'extrémité (24) du produit pâteux roulé (27) qui sont disposés à une distance (71) s'étendant transversalement par rapport à la direction de convoyage (15) qui correspond à la distance des zones d'extrémités ou extrémités (24) et/ou à la longueur de la zone médiane (70) du produit pâteux roulé (27), un mécanisme de préfaçonnage (30) transformant les pièces de pâte (10) venant des moyens de transport (55), qui est réalisé pour saisir et retourner le côté de base (6) complet, étant monté en amont du mécanisme d'enroulement (29).

20. Dispositif selon la revendication 19, dans lequel les organes d'enroulement (32) disposés à la distance (71) mentionnée sont couplés de manière ferme ensemble par au moins un étrier transversal (62) qui s'étend par l'intermédiaire des moyens de convoyage (55) transversalement par rapport à leur direction de convoyage (15).

21. Dispositif à station d'enroulement (28) selon la revendication 19 ou 20, dans lequel le mécanisme de préfaçonnage (30) est réalisé avec un tablier de préfaçonnage (57) suspendu verticalement qui est disposé transversalement par rapport à la direction de convoyage (15) et pend vers le bas sur les moyens de convoyage d'enroulement (55) et/ou frotte dessus.

22. Dispositif à station d'enroulement (28) selon la revendication 21, dans lequel, dans le mécanisme de préfaçonnage (30), un cylindre de pression (56) comportant un axe de rotation transversal à la direction de convoyage (15) et un sens de rotation correspondant à la direction de convoyage (15) est monté en amont du tablier de préfaçonnage (57) de telle façon que le cylindre de pression (56) forme avec les moyens de convoyage (55) un interstice de cylindrage entraînant dans la direction de convoyage (15).
